# EUROPEAN PATENT SPECIFICATION

(11) **EP 0 241 940 B1**
(45) Date of publication and mention of the grant of the patent: **27.01.1993**
(21) Application number: 87105712.1
(22) Date of filing: 16.04.1987
(51) Int. Cl.: G01N 27/26

(54) **Method of forming a capillary element for use in an electrophoresis instrument**
Methode zur Herstellung eines Kapillarelementes zur Verwendung in einem Elektrophoresegerät
Méthode pour former un composant capillaire utilisé dans un appareil d'électrophorèse

(30) Priority: 16.04.1986 US 852488
(43) Date of publication of application: 21.10.1987
(73) Proprietor: THE PERKIN-ELMER CORPORATION, Norwalk Connecticut 06859-0074 (US)
(72) Inventor: Ogan, Kenneth, Newton Connecticut 06470 (US); Everaerts, Frans M., NL-6006 NC Weert (NL); Verheggen, Theo P.E.M., NL-6005 AC Weert (NL)
(74) Representative: Grünecker, Kinkeldey, Stockmair & Schwanhäusser Anwaltssozietät

(56) References cited:
- GB-A- 1 448 267
- US-A- 4 575 424
- PATENT ABSTRACTS OF JAPAN, vol. 11, no. 72 (P-554)(2519), 5th March 1987; & JP-A-61233367
- JOURNAL OF CHROMATOGRAPHY, vol. 267, 1983, pages 67-73, Amsterdam, NL; D. KANIANSKY et al.: "Simple Cell for Conductimetric Detection in Capillary Isotachophoresis"
- JOURNAL OF CHROMATOGRAPHY, vol. 249, 1982, pages 221-230, Amsterdam, NL; T.P.E.M. VERHEGGEN et al.: "Volume-Coupling in Isotachophoresis"
- JOURNAL OF CHROMATOGRAPHY, vol. 283, 1984, pages 99-111, Amsterdam, NL; J.C.REIJENGA et al.: "Fluorescence Emission and Fluorescence Quenching as Detection Methods in Isotachophoresis"

## Description

This invention relates to a method of forming a capillary component for use as a measuring section in an electrophoresis instrument. This invention relates especially to the design and construction of separation channels and detectors for use in electrophoresis, as exemplified by zone electrophoresis and isotachophoresis (ITP).

Resolution in isotachophoresis or capillary zone electrophoresis is controlled by the diameter of the separation channel. Resolution changes with the square of the ratio of original diameter to new diameter of the separation channel. Therefore, as small an operating diameter as possible is sought. The design and construction of the detectors for such systems provide the practical limit for reduction of the diameter of the separation channel. Commercially available capillary electrophoretic instruments use 0.3 mm to 0.5 mm diameter capillaries, but Everaerts, Beckers and Verheggen (Isotachophoresis, Elsevier Scientific Publ. Co., Amsterdam, 1976, p.395) have described the construction of an instrumentz embodying a 0.2 mm diameter separation channel (i.e., a 2.25 to 6 fold improvement in resolution). These authors also describe the construction of the detectors for such a system, detectors which require diffficult and mechanically challenging construction techniques.

The detectors of choice for modern capillary electrophoretic analysis separations are the conductivity detector and the UN absorbance detector. These detectors should be mounted directly on the separation channel in order to retain the high resolution obtained by use of very small separation channels (0.2 mm in diameter of smaller). This places stringent demands on the introduction of light transverse to the separation channel for the UV absorbance detector. The large voltage gradient utilized for isotachophoresis or capillary zone electrophoresis also places severe restrictions on the width of the electrodes in contact with the separation channel in the conductivity detector. Thus, for a 15000 V gradient applied across a 20 cm long separation channel of 0.2 mm ID, the electrodes must be less than 10 µm thick; otherwise electrolysis occurs at the extreme edges of each electrode. The electrodes must also be precisely perpendicular to the axis of the separation channel for the same reason.

From US-A-4575424, a micro liquid chromatograph has become known in which a part of the capillary through which the liquid flows is produced by milling appropriate size of cylindrical grooves in the surfaces of two blocks which are assembled to form the said capillary. The said capillary likewise forms a light-path through which measuring light is passed. On the opposite faces of the said block further grooves are formed connecting the inlet and outlet ends of the said capillary. In the said further formed grooves, wires are inserted when the said whole block is later encased in the die and filled with a hardenable material in order to form the basic measuring unit for the chormatograph.

From the British patent 1448, a measuring unit for an electrophoretic measurement apparatus has become known, wherein in a block a capillary channel is formed through which the fluid is passed. Normal to the axis of the said capillary channel, electrodes of platinum wire are threaded tightly through the block. The said wires are arranged such that both electrodes are separated in the direction of the capillary channel by a small distance.

It is a primary object of the present invention to provide an improved means of constructing the conductivity and optical detectors for use in small bore isotachophoresis or capillary electrophoresis. One prior art technique for making a simple conductivity detector employed hot platinum wires which were melted through the wall of the polytetrafluoroethylene (PTFE) capillary used for the isotachophoretic separation channel. This is described by Kaniansky, et al. 267 Journal of Chromatography 67 (1983).

It is total volume of the separation channel which is important in an isotachophoretic separation rather than the length of the channel. Accordingly, volume coupling may be employed as disclosed by Verheggen and Everaerts, 249 Journal of Chromatography 221 (1982). The construction of a volume coupling system as described by Verheggen and Everaerts requires several interconnections between capillaries of different size, with the attendant problems of alignment and sealing. Another object of the present invention is to provide a method for easily producing volume coupling in combination with the detectors and separation channel described.

The afore-mentioned objects are achieved by the inventive methods as claimed in claims 1 and 11. Other objects, features, and advantages will be apparent from the following description and appended claims.

### Brief Description of Drawings

Fig. 1 is an exploded isometric view of one apparatus suitable for practicing the invention;
FIG. 2 is a top view of the apparatus of FIG. 1, assembled with a template wire in place;
FIG. 3 is a side view of the apparatus of FIG 2;
FIG. 4 is a cross-section taken substantially along the line 4-4 of FIG. 3 during a further stage of construction;
FIG. 5 is an exploded isometric view of an electrode assembly in accordance with the invention;
FIG. 6 is a view similar to FIG. 5 with the parts assembled;
FIG. 7 is a view illustrating the function of the electrode assemblies;
FIG. 8 is a cross-section of the ultraviolet detector portion of the invention;
FIG. 9 is an isometric view of an alternative method of forming electrodes and optical detectors in accordance with the present invention;
FIG. 10 is a top view of the apparatus of FIG. 9;
FIG. 11 is an enlarged longitudinal cross-section taken through the detector produced by the apparatus of FIGS. 9 and 10; and
FIG. 12 is an enlarged cross-section illustrating the formation of a volume coupling portion of the device of FIG. 4.

### Best Mode for Carrying out the Invention

The basic concept of this invention involves the use of a strand of wire or capillary tube as a template for the separation channel. The outside diameter and shape of the template correspond to the inside diameter and shape of a desired separation capillary. A pair of electrode wires or optical elements are pressed against the template in diametric opposition. A plastic is then polymerized around this assembly by casting or molding. The template is then removed, leaving a capillary channel having a wall surface which includes the wire electrodes and optical elements. Thus, the separation capillary, conductivity detector, and spectroscopy detectors are all assembled as a single unit, eliminating the problems associated with capillary connections to the detectors and to the rest of the system.

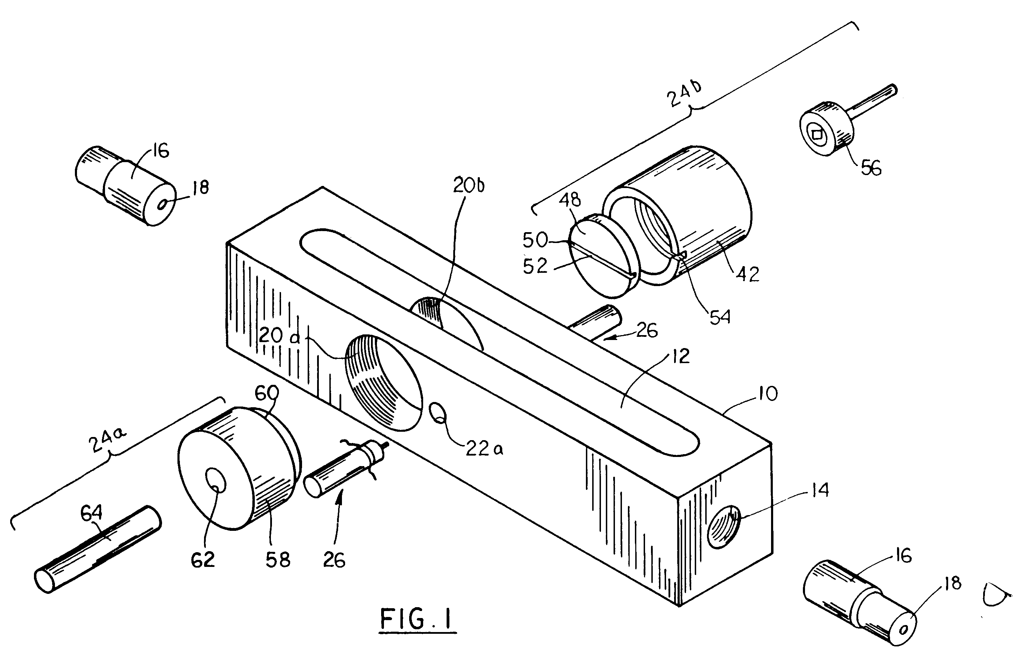

Referring now to FIG. 1, there is illustrated a plastic mold from 10 which may be of any desired shape but is shown here as a rectangular block of square cross-section. It defines a central cavity 12 and a pair of aligned openings 14 extend through its end walls. A pair of plastic plugs 16 are insertable into the openings 14 and each includes a small diameter hole 18 to frictionally engage a template, as will be explained. The sidewalls of mold form 10 define a pair of aligned, relatively large holes 20a, 20b and a pair of similarly aligned but relatively smaller holes 22a, 22b.

An optical assembly is formed from a male 24a and a female 24b sub-assembly which are insertable through the holes 20a, 20b. These assemblies will be described later in more detail. A pair of similar electrode assemblies 26 are insertable through the holes 22a, b.

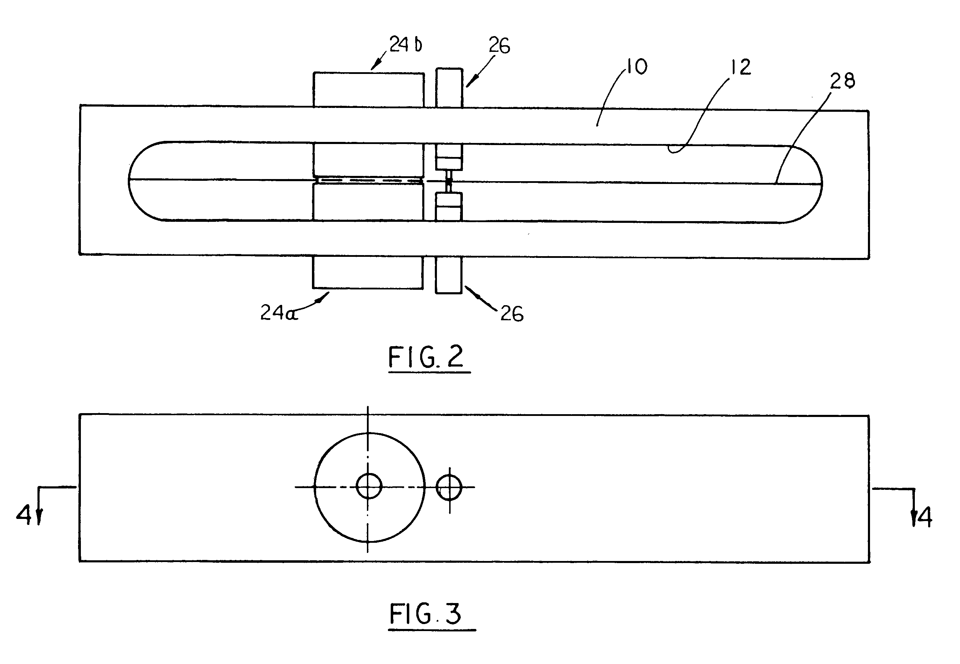

In practicing this invention, a template wire 28 (FIG. 2) is threaded through the holes 18 in plugs 16. The plugs are inserted into the openings 14 in the ends of the mold cavity, thereby supporting the template in the cavity as shown in FIG. 2. The template wire may be of any desired material such as, for example, steel to which a release agent has been applied or a material such as polytetrafluroethylene (PTFE) which would require no release agent. A typical diameter for the template wire 28 might be 0.2 mm.

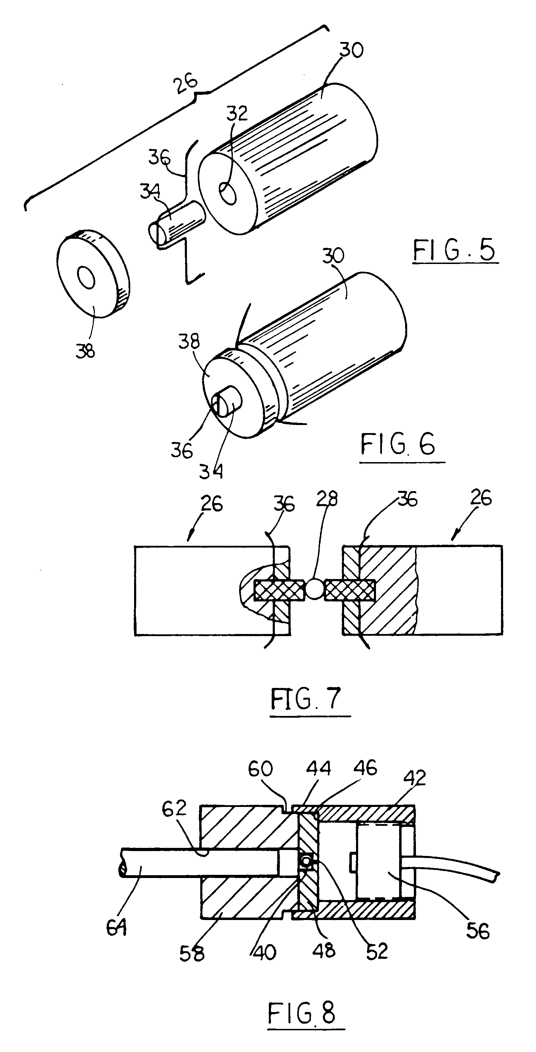

Turning now to FIGS. 5 and 6, the construction of the electrode assemblies 26 will be described. Each comprises a cylindrical brass body 30 having a hole 32 at one end. A plastic pin 34 is inserted into the hole 32 and a small diameter platinum wire 36 is positioned over the end of pin 34 in the manner illustrated. A brass washer 38 is then positioned over the pin 34 to form the completed assembly of FIG. 6. The electrode assemblies are inserted into the holes 22a, 22b such that the platinum wires 36 contact the template wire 28 on either side as illustrated in FIG. 7. Because wires 36 make essentially point contact with the template wire 28 on diametrically opposite sides, precise vertical alignment of wires 36 is not required.

To provide an optical detector, a transparent plastic sleeve 40 (Fig. 8) is positioned over the template wire 28 in the region between the large holes 20a, 20b in the sides of mold form 10. An optical sub-assembly 24b comprises a cylindrical brass body 42 having a female flange 44 around one end and an internal shoulder 46. Against the shoulder 46 is positioned a thin disc 48. The disc 48 defines a diametric slot 50 dimensioned so as to just receive the tubular sleeve 40 on the template wire 28. A small central hole 52 extends through the disc 48 from slot 50 to permit the passage of light into the hollow body 42. The flange 44 on body 42 includes a pair of slots 54 to accept the sleeve 40. Mounted within the hollow body 42 is a light detector 56.

Extending through the hole 20a on the opposite side of mold 10 is sub-assembly 24a comprising a cylindrical brass body 58 having a male post 60. Post 60 projects into the flange 44 such that the sub-assemblies 24a, 24b engage opposite sides of the tubular sleeve 40 as shown in FIG. 8. An internal bore 62 of body 58 houses a a light source such as the end of an illuminated light pipe in the form of a quartz rod 64.

After the various elements are assembled, the cavity 12 of the mold form 10 is filled with a suitable plastic. After the plastic has hardened, the template wire 28 is removed by pulling it out of the polymerized plastic, thereby leaving a capillary channel 66 which includes the electrode wires 36 actually forming a portion of the channel sidewall. What were formerly individual plastic elements, such as mold body 10, plugs 16 and sleeve 40 are now a single body as the cross-hatching in Fig. 4 indicates. In view of the fact that the fluid plastic flows in and around the electrode wires, only a very small portion of each wire's surface is actually exposed to the contents of the capillary channel.

Longitudinally displaced along the channel 66 from the electrode assemblies 26 are the optical sub-assemblies 24a, 24b. It will be apparent that an optical path is provided from the light source 64 through the sleeve 40 and the opening 52 to permit light to pass to the detector 56. In the embodiment having dimensions previously referred to, the actual diameter of the hole 52 was 0.24 mm, the slot 50 having a width of 0.35 mm.

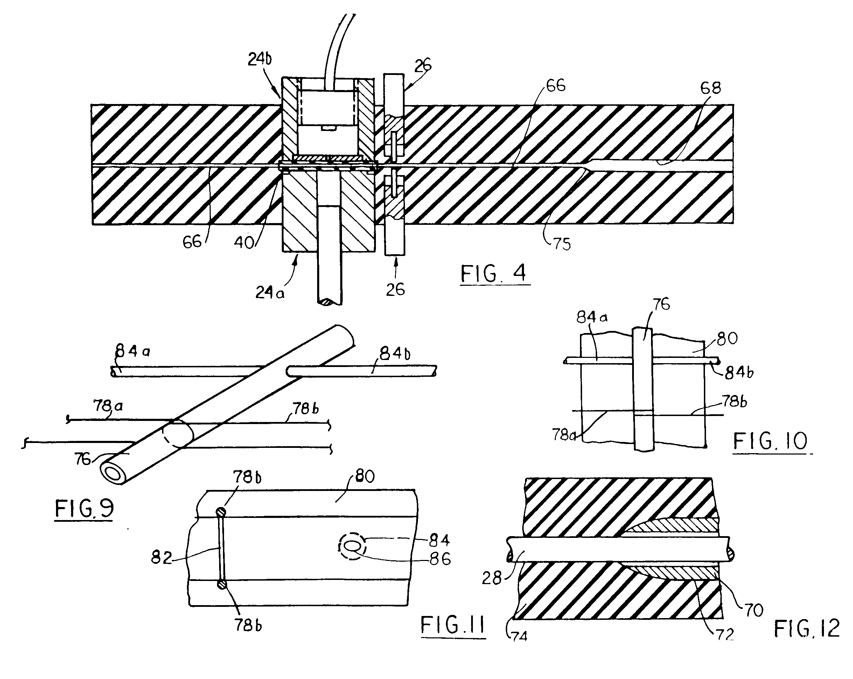

A significant advantage of the method of this invention is that the volume coupling configuration can easily be incorporated. Volume coupling refers to the use of a two-stage or multiple stage capillary system in which the pre-separation occurs in a wider bore region 68, as shown in FIG. 4, and then a transition is made to a more narrow bore capillary 66 which enhances resolution at the detector. As illustrated in FIG. 12, this may be accomplished by passing a length of steel capillary 70 over template wire 28. The end 72 of capillary 70 is bevelled as shown. The assembly is then cast in epoxy or other plastic 74 as previously described. After the epoxy sets, the steel capillary 70 is removed, along with the template wire 28, leaving a volume coupled region 75 as shown in FIG. 4. As a result of the tapered end 72, the two channel diameters are connected by a smooth transition zone. Alternatively, the capillary and template may be interconnected by a conical coupling, or a one-piece, plural diameter, template wire may be employed.

In FIGS. 9-11, there are illustrated various modifications of the basic method described above. In place of a solid wire template, there is provided a capillary template 76. One advantage of employing a capillary as a template is that it may be removed by methods other than pulling, such as dissolution or melting, or by electrolytic or electrochemical means. (All such methods are included in the term "dissolution" as used in the claims.) This makes it possible to generate shapes and dimensions that are not feasible by conventional machining or molding techniques. For example, a long length of capillary could be contained in the same external length by coiling the template in a helical shape. As another example, the cross-section of the template could differ from a simple circular shape, possibly only in the detection region. An oval shape might be used to increase the optical path length for an optical absorbance detector.

FIGS. 9-11 also show an alternative technique for installing platinum wire electrodes 78a, b. Each electrode wire is passed around the template 76 and pulled in opposite directions, as illustrated, prior to potting in a resin 80. Upon removal of the template, there remains only a thin, semicircular electrode region 82, as shown in FIG. 11, on each side of the channel. The thinness of each region is again due to the screening action of the polymer material. The degree of the screening will depend on the physical characteristics of the polymeric material, but permits use of slightly larger electrode wires since only a fraction of the full diameter is exposed to the electrical field gradient along the capillary zone. The fact that the two electrodes are slightly offset axially results in a potential gradient detector.

FIGS. 9 and 10 also illustrate a pair of optical fibers 84a, b. The optical quality ends of the fibers contact the template 76 diametrically opposite each other for the purpose of ultraviolet absorbance detection. Additional fibers may be added for fluorescence or multiple wavelength detection. After potting and removal of the template 76, there remains a direct window 86 into the capillary. This enables light to be introduced and monitored with very little loss as opposed to the conventional technique of shining light through the walls of PTFE capillaries. Furthermore, the window 86 is in the form of a natural optical slit, since the polymer flows around the template capillary except where the optical fiber makes tangential contact.

As used in the following claims, the term "electrophoresis" includes isotachophoresis, zone electrophoresis, moving boundary electrophoresis, and combinations of these.

This invention is also applicable to the detection of radioactive compounds by making at least one optical fiber of scintillation glass or of a material whose transmission characteristics are affected by nuclear radiation.

## Claims

1. A method of forming a capillary component for use as a measuring section in an electrophoresis instrument **characterised by** providing a template strand (28,76) having external profile dimensions and shape corresponding to the internal profile dimensions and shape of a desired capillary component (66);
contacting a first point on the surface of said template strand with a first fibre (36,78a,84a) capable of conducting a component-detecting medium;
contacting a second point on the surface of said template strand substantially opposite said first point, with a second fibre (36,78b,84b) capable of conducting a component-detecting medium;
encasing said template strand (28,76) within a body of hardenable material (75);
hardening said hardenable material; and
removing said template strand (28,76).

2. The method of claim 1 wherein said first and second fibres are wires (36) and said component-detecting medium is electricity.

3. The method of claim 2 wherein each of said contacting steps comprises:
looping said wire (36,78a,76b) over said template strand (28,76) and exerting a pulling force on said wire to make intimate contact between said wire and strand over substantially one half the circumference of said strand.

4. The method of claim 2 wherein each of said contacting steps comprises:
wrapping said wire (36) over the end of a support member (34); and
pressing the wire (36) with the aid of said support member (34) against the template strand (28).

5. The method of claim 1 wherein said first and second fibres are optical fibres (84a,84b) and said component-detecting medium is electromagnetic radiation.

6. The method of claim 5 wherein each of said optical fibres (84a,84b) includes a polished end making contact with said strand.

7. The method of claim 1 wherein said strand is a solid wire (28).

8. The method of claim 1 wherein said strand is a capillary tube (76).

9. The method of claim 1 wherein said removing step comprises pulling the template strand (28,76) from the hardened material (75).

10. The method of claim 1 wherein said removing step comprises dissolution of the material of said template strand (76).

11. A method of forming a capillary component for use as a measuring section in an electrophoresis instrument **characterised by** providing a template strand (28) having external profile dimensions and configuration complementary to the internal profile dimensions and configuration of a desired capillary component;
disposing a tubular sleeve (40) of light-transmitting material on a medial segment of said strand (28);
contacting one side of said medial segment with a light-transmitting member (64) and the diametrically opposite side of said segment with an optically opaque member (48) containing an optical aperture (52);
encasing said template strand within a body of hardenable material (75);
hardening said hardenable material; and
removing said template strand (28).

## Patentansprüche

1. Ein Verfahren zum Bilden einer Kapillarkomponente zur Verwendung als eine Meßsektion in einem Elektrophoreseinstrument, **gekennzeichnet durch** Vorsehen eines Modellstrangs (28, 76) mit äußeren Profilabmessungen und einer Form entsprechend den inneren Profilabmessungen und einer Form einer gewünschten Kapillarkomponente (66);
Inkontaktbringen eines ersten Punktes auf der Oberfläche des Modellstrangs mit einer ersten Faser (36, 78a, 84a), die in der Lage ist, ein Komponentendetektionsmedium zu führen;
Inkontaktbringen eines zweiten Punktes auf der Oberfläche des Modellstrangs, der im wesentlichen entgegengesetzt zu dem ersten Punkt liegt, mit einer zweiten Faser (36, 78b, 84b), die in der Lage ist, ein Komponentendetektionsmedium zu leiten;
Einschließen des Modellstrangs (28, 76) innerhalb eines Körpers aus härtbarem Material (75);
Härten des härtbaren Materials; und
Entfernen des Modellstrangs (28, 76).

2. Das Verfahren nach Anspruch 1, wobei die erste und zweite Faser Drähte (36) sind und das Komponentendetektionsmedium Elektrizität ist.

3. Das Verfahren nach Anspruch 2, wobei jeder der Kontaktierungsschritte umfaßt:
Herumlegen des Drahts (36, 78a, 76b) über den Modellstrang (28, 76) und Ausüben einer Zugkraft auf den Draht, um einen engen Kontakt zwischen dem Draht und dem Strang über wenigstens der Hälfte des Umfangs des Strangs herzustellen.

4. Das Verfahren nach Anspruch 2, wobei die Kontaktierungsschritte umfassen:
Umhüllen des Drahts (36) über dem Ende eines Trägerteils (34); und
Pressen des Drahts (36) mit Hilfe des Trägerteils (34) gegen den Modellstrang (28).

5. Das Verfahren nach Anspruch 1, wobei die erste und die zweite Faser optische Fasern (84a, 84b) sind, und das Komponentendetektionsmedium elektromagnetische Strahlung ist.

6. Das Verfahren nach Anspruch 5, wobei jede der optischen Fasern (84a, 84b) ein poliertes Ende enthält, welches Kontakt zu dem Strang herstellt.

7. Das Verfahren nach Anspruch 1, wobei der Strang ein fester Draht (28) ist.

8. Das Verfahren nach Anspruch 1, wobei der Strang eine Kapillarröhre (76) ist.

9. Das Verfahren nach Anspruch 1, wobei der Schritt des Entfernens des Modellstrangs ein Ziehen des Modellstrangs (28, 76) von dem gehärteten Material (75) umfaßt.

10. Das Verfahren nach Anspruch 1, wobei der Entfernungsschritt die Auflösung des Materials des Modellstrangs (76) umfaßt.

11. Ein Verfahren zum Bilden einer Kapillarkomponente zur Verwendung als eine Meßsektion in einem Elektrophoreseinstrument **gekennzeichnet durch** Vorsehen eines Modellstrangs (28) mit äußeren Profilabmessungen und einer Konfiguration komplementär zu den inneren Profilabmessungen und der Konfiguration einer gewünschten Kapillarkomponente;
Anordnen einer Röhrenbuchse (40) aus lichtübertragendem Material auf einem mittleren Segment des Strangs (28);
Inkontaktbringen einer Seite des mittleren Segments mit einem lichtübertragenden Teil (64) und der diametral entgegengesetzten Seite des Segments mit einem optischen undurchlässigen Teil (48), welches eine optische Blendenöffnung (52) enthält;
Einschließen des Modellstrangs innerhalb eines Körpers aus härtbarem Material (75);
Härten des härtbaren Materials; und
Entfernen ded Modellstrangs (28).

## Revendications

1. Procédé pour former un composant capillaire à utiliser en tant que partie de mesure dans un appareil d'électrophorèse, caractérisé par la présence d'un cordon gabarit (28, 76) ayant des dimensions et une forme de profil externe correspondant aux dimensions et à la forme du profil interne d'un composant capillaire (66) désiré ;
par la mise en contact d'un premier point sur la surface dudit cordon gabarit avec une première fibre (36, 78a, 84a) propre à conduire un milieu de détection de composants ;
par la mise en contact d'un second point sur la surface dudit cordon gabarit, sensiblement opposé audit premier point, avec une seconde fibre (36, 78b, 84b) propre à conduire un milieu de détection de composants ;
par l'enrobage dudit cordon gabarit (28, 76) dans un corps de matériau durcissable (75) ;
par le durcissement dudit matériau durcissable ; et
par l'enlèvement dudit cordon gabarit (28, 76).

2. Procédé selon la revendication 1, dans lequel lesdites première et seconde fibres sont des fils (36) et ledit milieu de détection de composants est l'électricité.

3. Procédé selon la revendication 2, dans lequel chacune desdites étapes de mise en contact comprend :
le bouclage dudit fil (36, 78a, 76b) sur ledit cordon gabarit (28, 76) et l'exercice d'une force de traction sur ledit fil pour établir un contact intime entre ledit fil et ledit cordon sur sensiblement une moitié de la circonférence dudit cordon.

4. Procédé selon la revendication 2, dans lequel chacune desdites étapes de mise en contact comprend :
l'enroulement dudit fil (36) sur l'extrémité d'un élément de soutien (34) ; et
la pression du fil (36) à l'aide dudit élément de soutien (34) contre le cordon gabarit (28).

5. Procédé selon la revendication 1, dans lequel lesdites première et seconde fibres sont des fibres optiques (84a, 84b) et ledit milieu de détection de composants est un rayonnement électromagnétique.

6. Procédé selon la revendication 5, dans lequel chacune desdites fibres optiques (84a, 84b) comprend une extrémité polie établissant le contact avec ledit cordon.

7. Procédé selon la revendication 1, dans lequel ledit cordon est un fil plein (28).

8. Procédé selon la revendication 1, dans lequel ledit cordon est un tube capillaire (76).

9. Procédé selon la revendication 1, dans lequel ladite étape d'enlèvement comprend le tirage du cordon gabarit (28, 76) hors du matériau durci (75).

10. Procédé selon la revendication 1, dans lequel ladite étape d'enlèvement comprend la dissolution du matériau dudit cordon gabarit (76).

11. Procédé pour former un composant capillaire à utiliser en tant que partie de mesure dans un appareil d'électrophorèse, caractérisé par la présence d'un cordon gabarit (28) ayant des dimensions et une configuration de profil externe complémentaires des dimensions et de la configuration du profil interne d'un composant capillaire désiré ;
par la mise en place d'un manchon tubulaire (40) en matériau transmetteur de lumière sur un segment médian dudit cordon (28) ;
par la mise en contact d'un côté dudit segment médian avec un élément transmetteur de lumière (64) et du côté diamétralement opposé dudit segment avec un élément (48) optiquement opaque comportant une ouverture optique (52) ;
par l'enrobage dudit cordon gabarit dans un corps de matériau durcissable (75) ;
par le durcissement dudit matériau durcissable ; et
par l'enlèvement dudit cordon gabarit (28).
